# EUROPÄISCHE PATENTANMELDUNG

(11) **EP 4 039 076 A1**
(43) Veröffentlichungstag der Anmeldung: **10.08.2022**
(21) Anmeldenummer: 21000334.9
(22) Anmeldetag: 22.11.2021
(51) Int. Cl.: A01D 34/86, A01D 43/077

(54) **MÄH- UND/ODER SCHNEIDGERÄT**

(30) Priorität: 23.11.2020 DE 102020007136
(71) Anmelder: Gerhard Dücker GmbH & Co. KG Landmaschinenfabrik, 48703 Stadtlohn (DE)
(72) Erfinder: DÜCKER, Christian, 48703 Stadtlohn (DE)
(74) Vertreter: Busse, Harald F.W.

(57) **Zusammenfassung**

Ein Mäh- und/oder Schneidgerät (1) mit zumindest einem an einem Fahrzeug (2) gehaltenen beweglichen Ausleger (3), von dem ein Arbeitskopf (4) getragen ist, und mit einer Absaugung für vom Arbeitskopf (4) geliefertes Gut, wird so ausgebildet, daß zumindest ein die Absaugung bewirkendes Förderorgan (9) dem Arbeitskopf (4) zugeordnet ist.

## Beschreibung

Die Erfindung betrifft ein Mäh- und/oder Schneidgerät mit zumindest einem an einem Fahrzeug gehaltenen beweglichen Ausleger, von dem ein Arbeitskopf getragen ist, und mit einer Absaugung für vom Arbeitskopf geliefertes Gut nach dem Oberbegriff des Anspruchs 1.

Es ist bekannt, derartige Mäh- und/oder Schneidgeräte mit einer Absaugung zu versehen, bei der ein Förderorgan oben auf dem Fahrzeug angeordnet ist und direkt in einen Vorratsbehälter des Fahrzeugs einfördert. Das Förderorgan benötigt daher einen vorgeordneten langen Schlauch zum Arbeitskopf hin. Die Flexibilität der Förderung ist damit gering. Zudem ist durch den langen Schlauch vor dem Förderorgan die Saugleistung eingeschränkt, die energetische Effektivität ist gering.

Der Erfindung liegt das Problem zugrunde, hier eine Verbesserung zu erreichen.

Die Erfindung löst dieses Problem durch ein Mäh- und/oder Schneidgerät mit den Merkmalen des Anspruchs 1 und durch einen Arbeitskopf mit den Merkmalen des Anspruchs 16. Hinsichtlich weiterer Ausgestaltungen und Merkmale der Erfindung wird auf die abhängigen Ansprüche 2 bis 15 und 17 verwiesen.

Durch das erfindungsgemäße Gerät ist es dadurch, daß zumindest ein die Absaugung bewirkendes Förderorgan dem Arbeitskopf zugeordnet ist, möglich, mit einem sehr hohen Wirkungsgrad zu arbeiten. Die Effizienz ist somit deutlich verbessert, es wird erheblich Energie eingespart. Damit können auch kleinere Geräte Verwendung finden. Statt des Saugens durch einen langen Schlauch wird hier direkt bei der Entstehung abgefördert, das Material wird in einen weiterführenden Schlauch gedrückt, so daß insgesamt das Saugen durch Unterdruck durch ein Einpressen mit Überdruck ersetzt ist. Das andere, abgebende Ende des Schlauchs ist dadurch flexibel und kann beispielsweise wahlweise in das den Ausleger tragende Fahrzeug oder direkt in einen begleitenden Ladewagen einfördern.

Das Förderorgan kann mit dem Arbeitskopf beweglich sein.

Sofern das Förderorgan im Betrieb höchstens 1,5 Meter hinter einem schneidenden oder mähenden Arbeitsbereich des Arbeitskopfes gehalten ist, ist ein optimiertes Einbringen des Guts in das Förderorgan ermöglicht. Dieses kann insbesondere auch an dem Ausleger selbst mit gehalten sein, so daß der konstruktive Aufwand gering ist und auch eine Nachrüstung an bestehenden Auslegern möglich ist. Es muß somit kein Spezialfahrzeug neu konstruiert werden, sondern auch an bestehenden Anlagen kann die Abförderfunktion zusätzlich aufgesetzt werden.

Insbesondere umfaßt das Förderorgan ein Auswurfgebläse. Dieses zeigt eine hohe Effektivität und kann auf den Arbeitskopf aufgesetzt sein.

Das Förderorgan kann eine zentrale Ansaugöffnung und eine tangentiale Auswurföffnung umfassen. Damit kann das Förderorgan so plaziert werden, daß die Ansaugöffnung zentral hinter der Quermitte eines vorderen Arbeitsbereichs, also etwa eines Mähbalkens oder einer Mähwalze, liegt.

Mit dem tangentialen Auswurf kann eine vertikale oder nahezu vertikale Aufwärtsförderung erreicht werden, bei der das Förderorgan in eine zunächst nach oben führende Schlauchleitung einfördert.

Wenn das zumindest eine Förderorgan schräg oberhalb eines schneidenden oder mähenden Arbeitsbereichs des Arbeitskopfes angeordnet ist, kann der Arbeitsbereich ohne Einfluß des Ansaugstroms bleiben.

Weiter ist es günstig, das zumindest eine Förderorgan mit dem unteren Ende der Ansaugöffnung zumindest 25 Zentimeter oberhalb des schneidenden oder mähenden Arbeitsbereichs des Arbeitskopfes anzuordnen, kann der Arbeitsbereich besonders wenig von einer Sogwirkung des Förderorgans beaufschlagt bleiben. Dadurch erhalten Insekten und Samenkörner erheblich verbesserte Möglichkeiten, vor dem Eintritt in das Förderorgan wieder beispielsweise auf eine gemähte Fläche zurückzufallen und deren biologische Qualität zu verbessern.

Für den gleichen Zweck ist es auch günstig, wenn zwischen dem Arbeitsbereich des Arbeitskopfs und der Ansaugöffnung eine überwiegend nach unten offene Zuförderbahn angeordnet ist. Die Zuförderbahn sollte eine gewisse Mindestlänge von etwa 50 Zentimeter bis zu einem Meter haben, um auf dem Weg ein möglichst vollständiges Rückfallen des gewünschten Guts zu erhalten. Die Zuförderbahn ist damit in Förderrichtung etwa 50 bis 180 Zentimeter lang, insbesondere ca. 80 bis 150 Zentimeter, um so einerseits gute Rückfallmöglichkeiten zu schaffen und andererseits keinen zu großen Sog für das abgetrennte Halmgut zu benötigen.

Insbesondere kann dabei die Zuförderbahn zu mehr als 50% ihrer Fläche nach unten geöffnet sein. Auch eine Öffnung von mehr als 70% ist möglich und vorteilhaft, wenn hinreichend langes Gras geschnitten wird, so daß die abgeschnittenen Halme nicht mit nach unten durchfallen, sondern in die Absaugöffnung gelangen.

Eine besonders vollständige Einförderung des abgetrennten Guts ist ermöglicht, wenn die Zuförderbahn entgegen der Fahrtrichtung in Querrichtung auf die Eintrittsöffnung des Förderorgans hin verjüngt. Das Gut kann damit besonders effektiv und vollständig dem Förderorgan zugeführt werden, soweit es sich um größere Teile wie etwa Halmabschnitte handelt. Die Zuförderbahn ist aber hinreichend lang und hinreichend nach unten geöffnet, daß Kleinteile wie Samen und auch Insekten nach unten durchfallen können und nicht mit abgesaugt werden. Die Länge der Zuförderbahn kann mehrere 10 Zentimeter bis deutlich über einen Meter betragen, um eine hinreichende Rückgabe von biologisch wertvollem Material zu ermöglichen.

Dabei kann die Zuförderbahn zumindest zu den Querseiten von seitlichen passiven Einführhilfen begrenzt sein.

Weiter kann sehr günstig die Zuförderbahn mehrere nebeneinander gelegene und zum Förderorgan führende Leitschienen umfassen, zum Beispiel auch Stahlstangen oder -rohre, auf denen das Gut nach hinten gleiten kann und die zwischen sich große Räume für das Rückfallen von Insekten und Samenkörnern belassen können. Beispielsweise können die Räume zwischen den in Förderrichtung verlaufenden Stangen oder Rohren jeweils ca. 5 bis 12 Zentimeter breit sein. Es sind nebeneinander zumindest drei Rohre oder Stangen vorgesehen, auch 10 bis 15 nebeneinander können möglich sein. Anders als einzelne Lochungen im Boden, neigen solche in Längsrichtung offenen Bereiche zwischen Stangen oder Rohren oder anderen Leitschienen nicht zum Verstopfen. Ein freies Durchfallen von kleinen Tieren oder Samen ist jederzeit gesichert.

Weiter können günstig der Zuförderbahn bewegliche, vom Arbeitsbereich aufgenommenes Gut in Richtung der Ansaugöffnung bewegende Hilfsmittel zugeordnet sein, zum Beispiel auch (kämmende) Zinken oder ähnliche aktive Schubmittel, die etwa von den Querseiten (und/oder von oben und/oder von unten) her auf das Gut einwirken und hier zum Beispiel um vertikale Achsen rotieren. Die Einförderung ist dann von einem ansaugenden Luftstrom völlig unabhängig. Die Zinken können bei ihrer Drehbewegung etwa in die Zwischenräume zwischen Stangen oder Rohren kämmend eingreifen.

Die Stangen oder Rohre liegen hierfür besonders günstig nicht alle in einer horizontalen Ebene, sondern die zu den Querseiten angeordneten Rohre oder Stangen liegen höher, so daß sich im Querschnitt so etwas wie eine Aufnahmeschale ergibt, die ein ungewolltes seitliches Überfallen von Mähgut verhindert.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische perspektivische Ansicht eines Mäh- und/oder Schneidgeräts von schräg vorne mit einem hier seitlich ausgreifenden Ausleger, an dem ein Arbeitskopf montiert ist, der nicht nur einen vorderen Arbeitsbereich umfaßt, sondern zusätzlich auch ein bezüglich der Arbeitsrichtung weiter hinten gelegenes Förderorgan umfaßt,
- Fig. 2: eine Vorderansicht des Arbeitskopfes nach Figur 1, hier mit einer Mähwalze versehen, mit angebautem Förderorgan,
- Fig. 3: den Arbeitskopf nach Figur 2 mit dem nachgeschalteten Förderorgan in Ansicht von links (bezüglich der Fahrtrichtung) in teilweise aufgebrochener Darstellung mit Durchsicht auf eine zum Mulchen geeignete Schlegelwalze,
- Fig. 4: den Arbeitskopf nach Figur 3 mit Förderorgan in Ansicht von rechts (bezüglich der Fahrtrichtung),
- Fig. 5: eine ähnliche Ansicht wie Figur 3, jedoch hier eines Arbeitskopfes, der anstelle einer mulchenden Schlegelwelle ein Balkenmähwerk oder Messerbalken und ein Raffersystem aufweist,

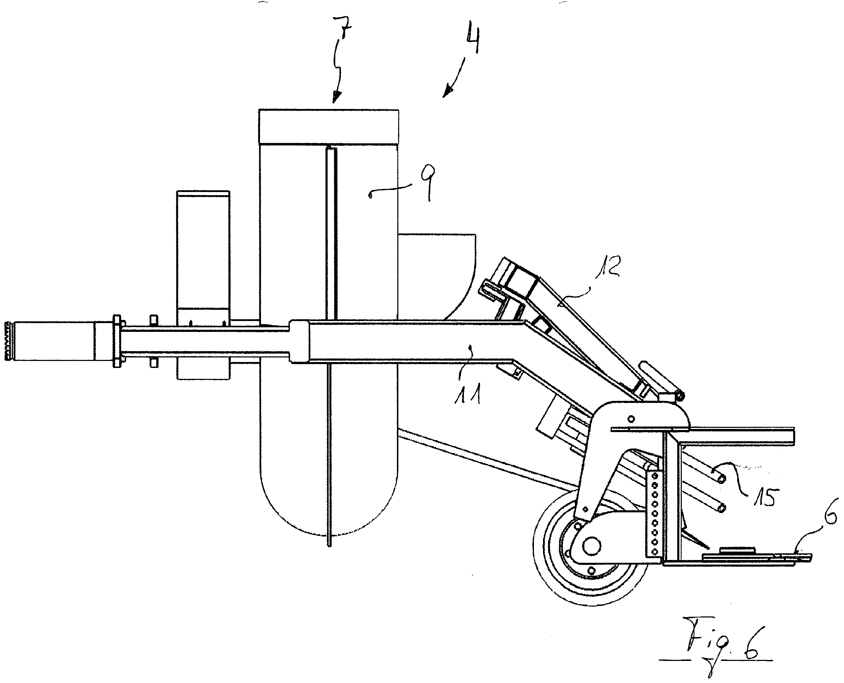

- Fig. 6: eine ähnliche Ansicht wie Figur 4, jedoch hier eines Arbeitskopfes, der anstelle einer mulchenden Schlegelwelle ein Balkenmähwerk oder Messerbalken und ein Raffersystem aufweist,
- Fig. 7: den Arbeitskopf mit anmontiertem Förderorgan in Ansicht von oben,
- Fig. 8: den Arbeitskopf mit anmontiertem Förderorgan in perspektivischer Ansicht von schräg vorne und oben nach Demontage der Verkleidungen des Arbeitskopfes,

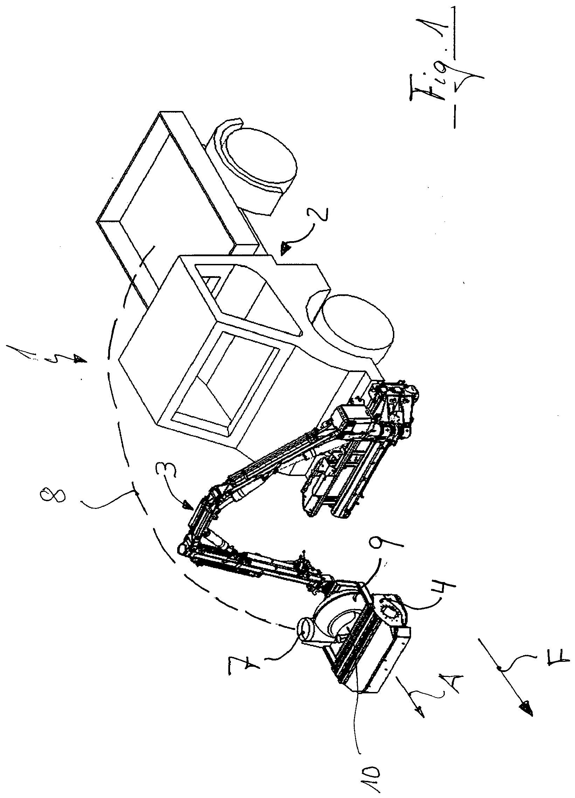

Gemäß der in Figur 1 dargestellten Übersichtszeichnung umfaßt das insgesamt mit 1 bezeichnete Mäh- und/oder Schneidgerät ein Fahrzeug 2, das selbstfahrend oder gezogen sein kann. Hierbei kommen neben Straßenfahrzeugen zum Beispiel auch Schienen- oder Wasserfahrzeuge in Betracht. An dem Fahrzeug 2 ist zumindest ein Ausleger 3 gehalten, von dem ein Arbeitskopf 4 getragen ist. Der Ausleger 3 kann mehrere Gelenke umfassen und an unterschiedlichen Stellen des Fahrzeugs 2 angeordnet sein, zum Beispiel wie hier vorderseitig, aber auch rückseitig oder auf einer Ladefläche des Fahrzeugs 2. Ein Ausgreifen des Arbeitskopfes 4 über einige Meter nach links oder rechts vom Fahrzeug 2 aus ist möglich.

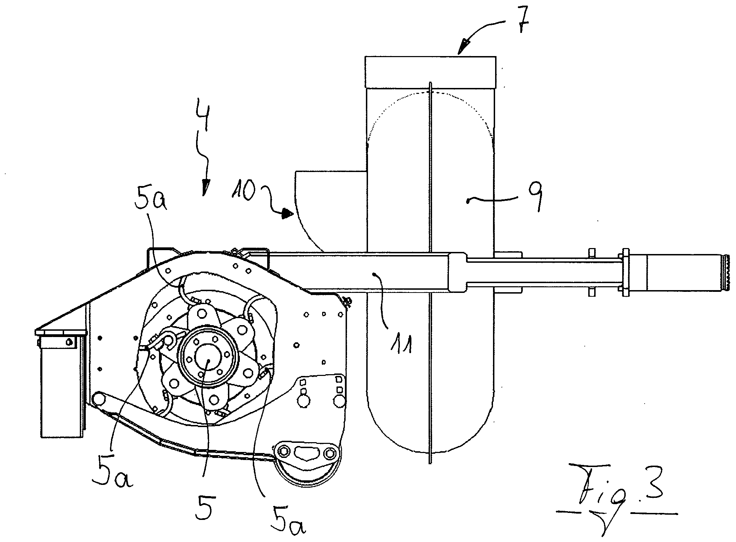

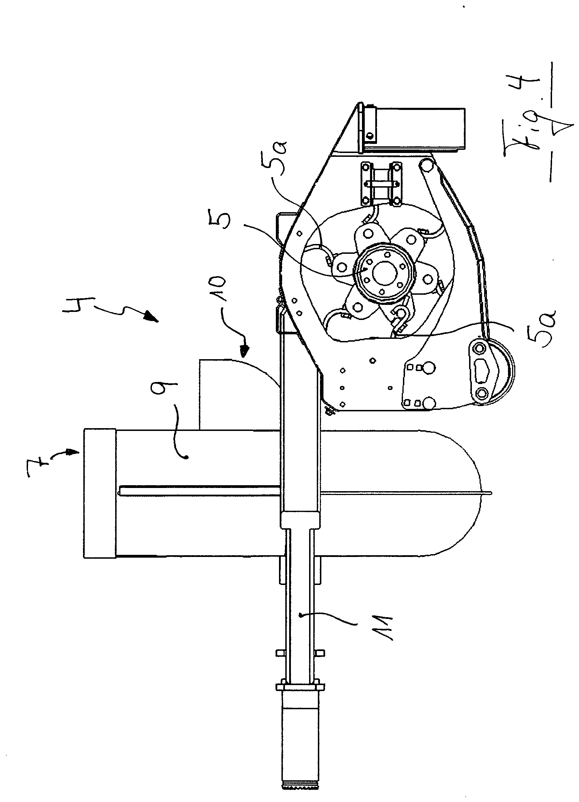

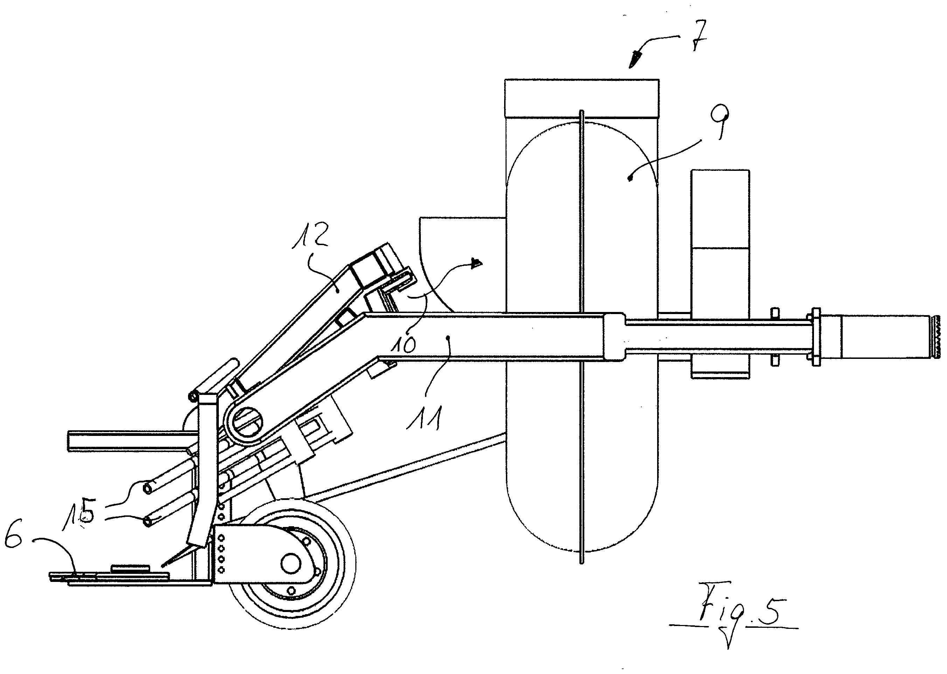

Der Arbeitskopf 4 erfüllt eine Mäh- und/oder Schneidfunktion, worunter jedes Abtrennen von Pflanzen oder Pflanzenteilen verstanden wird. Typisch ist ein Einsatz an Straßenrändern für etwa Halmgut oder Hecken. Die Erfindung ist jedoch nicht auf diese Anwendungen beschränkt. Der Arbeitskopf 4 ist daher zum Beispiel mit einer Schlagmittel 5a umfassenden Mähwalze 5 wie in den Figuren 1 bis 4 oder mit einem Mäh- oder Messerbalken 6 wie in den Figuren 5 ff. versehen. Auch andere abtrennende Werkzeuge sind möglich. Die Mähwalze 5 kann zusätzlich auch eine Mulchfunktion erfüllen. Insgesamt können die abtrennenden Werkzeuge (Mähwalze 5, Mähbalken 6, Heckenschere, Fräskopf o.ä.) unterschiedlich ausgebildet sein. Sie können in jedem Fall im Einsatz einen Strom von abgetrenntem Gut erzeugen, das weiterbefördert werden soll.

Der Arbeitskopf 4 ist üblicherweise einige zehn Zentimeter bis deutlich über einen Meter breit. Der Mähbalken 6 oder die Mähwalze 5 kann ungefähr über die ganze Breite des Arbeitskopfes 4 erstreckt sein.

Des weiteren ist an dem Mäh- und/oder Schneidgerät 1 eine Absaugung für vom Arbeitskopf 4 geliefertes Gut vorgesehen, von der in der schematischen Ansicht nach Figur 1 ein Förderorgan 9 zu erkennen ist, das dem Arbeitskopf 4 zugeordnet ist und über eine Auswurföffnung 7 als Übergabestutzen in einen Schlauch 8 (nur gestrichelt angedeutet) zu sehen ist. Das Förderorgan 9 bewirkt dabei die Absaugung und ist zumindest während des Betriebs in kurzem Abstand zu dem Arbeitsbereich, also der Mähwalze 5, dem Mähbalken 6 oder einem anderen abtrennenden Werkzeug, gelegen. Gemäß der Zeichnung ist das Förderorgan 9 bezüglich der Fahrtrichtung F hinter dem abtrennenden Werkzeug (Mähwalze 5, Mähbalken 6 ...) gelegen.

Insbesondere beträgt der hinter dem Arbeitsbereich bezüglich der Arbeitsrichtung A gemessene Abstand weniger als 1,5 Meter. Die Arbeitsrichtung A des Arbeitskopfs 4 kann parallel zur Fahrtrichtung F liegen, dies ist jedoch nicht in jeder Phase des Betriebs zwingend.

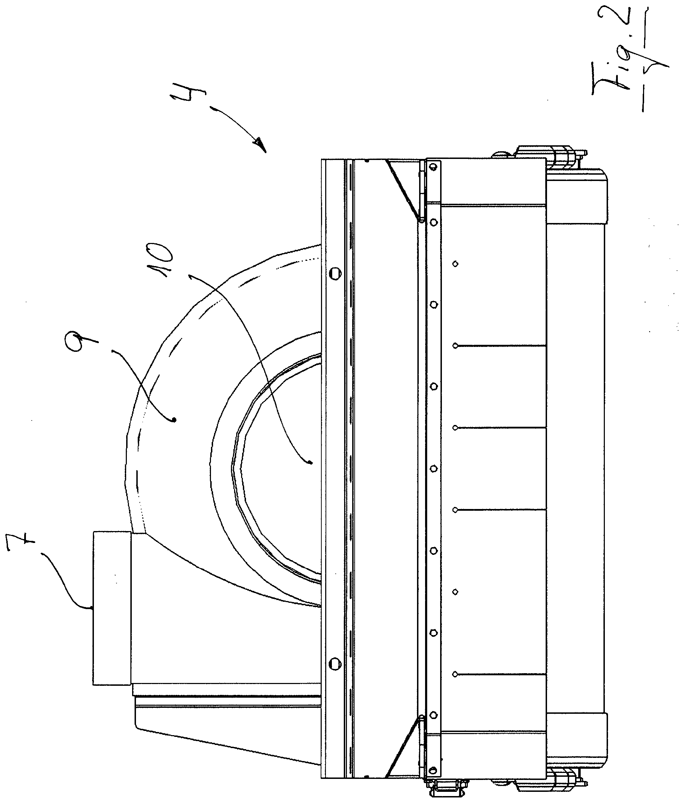

Das Förderorgan 9 umfaßt hier ein Auswurfgebläse mit einem um eine ungefähr horizontal liegende Achse rotierbaren Rotator, der sowohl Luft als auch zugeführtes Gut durch eine zentrale Ansaugöffnung 10 einzieht und durch eine tangentiale Auswurföffnung 7 nach oben in einen dort angeschlossenen Schlauch 8 herausdrückt und weiterfördert. Diese grundsätzliche Geometrie ist etwa in der Vorderansicht nach Figur 2 gut erkennbar.

Die tangentiale Auswurföffnung 7 ist dabei so orientiert, daß das Förderorgan 9 in eine zunächst nach oben führende Schlauchleitung 8 einfördert. Der Verlauf der Schlauchleitung 8 ist natürlich variabel. Auch ein festes Rohr ist grundsätzlich zur Weiterbeförderung möglich. Die Auswurföffnung 7 mit dem zugehörigen Übergabestutzen kann in beiden Fällen unterschiedlich orientiert und ggf. auch variabel versetzbar sein.

Auch eine andere Orientierung oder Anordnungsstelle eines solchen Förderorgans 9, etwa eines Gebläses, ist möglich, zum Beispiel liegend, seitlich oder in Fahrtrichtung vor oder direkt über dem abtrennenden Werkzeug 5, 6.

Dadurch, daß der Schlauch 8 erst bezüglich der Gutrichtung hinter dem Förderorgan 9 liegt und die Eintrittsöffnung 10 direkt dem Gutstrom, der vom Arbeitsbereich angeliefert wird, zugewandt ist, bildet das Förderorgan ein das aufgenommene Gut über Druck weiterförderndes Organ. Anstelle des Sogs durch einen langen Schlauch, der mit seinem Widerstand den Saug-Wirkungsgrad begrenzt, ist hier direkt die offene Ansaugöffnung 10, so daß weit weniger Leistung für das Förderorgan 9 bei gleichviel gefördertem Gutstrom erforderlich ist. An Stelle eines flexiblen Schlauches kann auch eine zumindest bereichsweise starre Leitung vorgesehen sein.

Das zumindest eine Förderorgan 9 ist in der Zeichnung mit an dem beweglichen Arbeitskopf 4 gehalten und somit auch mit diesem beweglich. So kann das Förderorgan 9 auch mit in eine Transportstellung am Fahrzeug 2 eingefaltet werden. Beispielsweise kann hierfür eine gemeinsame Tragstruktur 11, etwa ein Rahmen, vorgesehen sein, der sowohl das Förderorgan 9 als auch den eigentlichen Arbeitskopf 4 trägt. Der Rahmen kann seitliche Längsrahmenteile 11a, 11b als Längsträger umfassen, die über Querträger mit einander verbunden sind - ähnlich wie bei einem Leiterrahmen. Der Arbeitsbereich und das zumindest eine Förderorgan 9 können daran gehalten und auch in ihrer Lage gegeneinander justierbar sein. Die Längserstreckung der Tragstruktur 11 kann so je nach Bedarf, Gelände und zu schneidendem Gut variiert werden. Auch eine Nachrüstung einer solchen Tragstruktur 11 und eines Förderorgans 9 an bereits bestehende und benutzte Arbeitsköpfe 4 ist möglich.

Weiter muß das zumindest eine Förderorgan 9 nicht nur bezüglich der Arbeitsrichtung A hinter dem schneidenden oder mähenden Arbeitsbereich liegen, sondern es kann auch in einer Ebene oberhalb des Arbeitskopfes 4 angeordnet sein. Dann steht es insgesamt schräg oberhalb des Arbeitsbereichs des Arbeitskopfes 4. Insbesondere ist dabei das zumindest eine Förderorgan 9 mit dem unteren Ende seiner Ansaugöffnung 10 zumindest 25 Zentimeter oberhalb des schneidenden oder mähenden Arbeitsbereichs des Arbeitskopfes 4 angeordnet. Von dort aus wird dann zur Ansaugöffnung 10 hin schräg aufwärts gefördert. Auch die Höhendifferenz kann verstellbar sein, etwa dadurch, daß die Tragstruktur 11 mehrteilig ist und einen bezüglich der Arbeitsrichtung A vorderen Rahmenteil 12 umfaßt, der um eine horizontale Querachse 13 gegenüber den Längsrahmenteilen 11a, 11b schwenkbar und in einem eingestellten Schwenkwinkel fixierbar ist.

Damit liegt der Mähbalken 6 oder die Mähwalze 5 oder ein anderes abtrennendes Werkzeug nicht direkt vor der Eintrittsöffnung 10, sondern weiter unten. Somit ist auch die Sogwirkung des Förderorgans 9 direkt am schneidenden oder mähenden Arbeitsbereich minimiert, im Idealfall bis auf Null. Dadurch, daß aufgrund des auf der Ansaugseite vor dem Förderorgan 9 nicht vorhandenen Ansaugschlauchs der für den Saugprozeß relevante Wirkungsgrad deutlich verbessert ist, kann auch mit einer viel kleineren Auslegung des Gebläses oder ähnlichen Förderorgans 9 gearbeitet werden. Durch die deutlich verminderte Sogwirkung ist verhindert, daß Insekten und andere Kleinlebewesen wie auch Samenkörner vollständig eingesaugt werden. Vielmehr erhalten diese auf dem Weg zur Eintrittsöffnung 10 des Förderorgans 9 hin eine Chance, wieder auf die gemähte oder anders bearbeitete Fläche zurückzufallen und deren biologische Qualität zu verbessern.

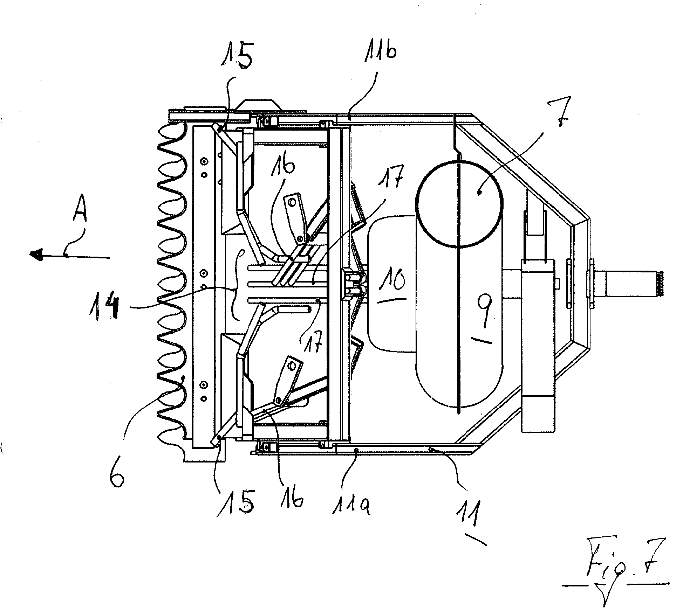

Dem gleichen Zweck dient auch, daß zwischen dem Arbeitsbereich des Arbeitskopfs 4 und der Ansaugöffnung 10 eine überwiegend nach unten offene Zuförderbahn 14 angeordnet ist. Dabei kann der Anteil der nach unten offenen Bereiche erheblich sein, insbesondere ist die Zuförderbahn 14 zu mehr als 50% ihrer Fläche nach unten geöffnet. In Figur 7 beispielsweise ist gut erkennbar, daß die Zuförderbahn 14 nur wenige - zum Beispiel drei - nebeneinander gelegene Stahlrohre oder massive Stahlstangen umfaßt, zwischen denen kleines Material nach unten zurückfallen kann. Diese bilden Leitschienen 17 in Richtung der Ansaugöffnung 10 aus, auf der astiges oder halmartiges Gut zuverlässig entgegen der Arbeitsrichtung A zum Förderorgan 9 hin transportierbar ist, wohingegen Kleinteile der o. g. Art dazwischen durchfallen können. Hier sind etwa 70% bis 90% der Breite der Förderbahn 14 als nach unten offener Raum belassen.

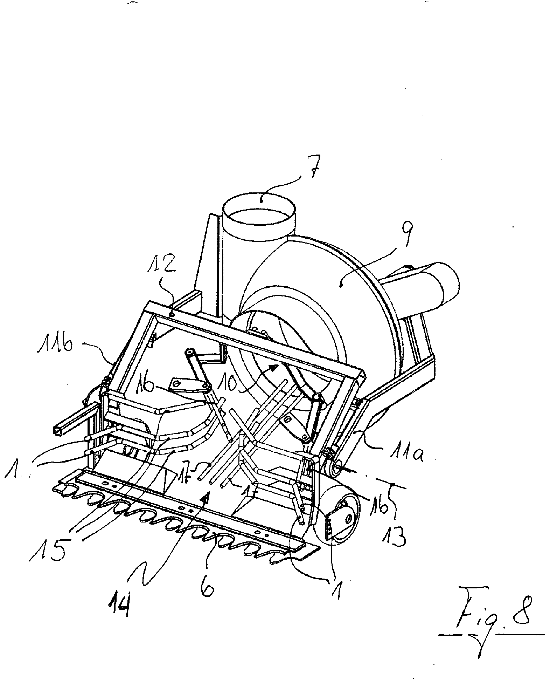

In den Figuren 7 und 8 wird weiter deutlich, daß die Zuförderbahn 14 zumindest zu den Querseiten von seitlichen passiven Einführhilfen 15 begrenzt ist, die beispielsweise ebenfalls nur durch Stahlstangen wie in der Zeichnung oder auch durch geschlossene Bleche oder andere passive Baueinheiten gebildet sein können. Die hier gezeichneten Stahlstangen liegen ungefähr horizontal. Dabei sind mehrere solcher Stangen parallel übereinander angeordnet. Eine Teilung in vordere und hintere Bereiche ist möglich. Auch andere Zuförderbahnen, wie etwa ein bewegtes Förderband mit Durchbrechungen oder andere aktive Förderer, oder ein durchbrochenes Blech oder ähnliche passive Bahn, sind alternativ möglich. Auch ist über den Verlauf der Förderbahn eine Kombination unterschiedlicher Ausbildungen möglich.

Diese Einführhilfen 15 führen dazu, daß die Zuförderbahn 14 in ihrem Verlauf entgegen der Arbeitsrichtung A in Querrichtung verjüngt. Der Gutstrom wird daher zuverlässig auf die zentrale Ansaugöffnung 10 zu befördert, deren Durchmesser weitaus kleiner sein kann als die Arbeitsbreite der Mähwalze 5 oder des Mähbalkens 6. Typisch beträgt der Durchmesser der Ansaugöffnung 10 weniger als ein Drittel bis die Hälfte der Arbeitsbreite. Die Ansaugöffnung 10 muß auch nicht zwingend rund sein, sondern kann etwa auch eine Rechtecköffnung oder eine andere Form ausbilden. Auch kann sie in mehrere Teilöffnungen aufgeteilt sein, die je nach Anordnung auch voneinander beabstandet sein können.

Insbesondere bei einer von der Zeichnung abweichenden Anordnungsstelle und/oder Orientierung des Förderorgans 9, kann eine solche Aufteilung der Ansaugöffnungen, zum Beispiel, im Nahbereich des abtrennenden Werkzeugs 5, 6, sinnvoll sein.

Es ist auch möglich, daß mehrere kleine Förderorgane 9 am Arbeitskopf 4 angeordnet sind und das Gut in zumindest eine Leitung 8 einfördern.

Wie oben erwähnt, kann die Zuförderbahn 14 entgegen der Arbeitsrichtung A, also in Förderrichtung des abgetrennten und abzusaugenden Guts, ansteigen. Dennoch soll ein flüssiger Gutstrom ohne Verstopfungen gewährleistet sein und andererseits zumindest der vordere Bereich der Zuförderbahn 14 noch weitestgehend frei von Sogwirkung der Absaugung gehalten werden. Daher ist es sehr vorteilhaft, wenn der Zuförderbahn 14 bewegliche, vom Arbeitsbereich aufgenommenes Gut in Richtung der Ansaugöffnung 10 bewegende Hilfsmittel 16 zugeordnet sind. Diese können forkenartig ausgebildet sein - ähnlich wie bei einem Heuwender - und zum Beispiel kämmend zwischen seitlichen passiven Einführhilfen 15 durchgeführt werden. Damit zeigt sich der besondere Sinn der Ausführung, für die passiven Einführhilfen 15 Stahlstangen oder ähnliche offene Strukturen zu verwenden, durch deren Zwischenräume die Hilfsmittel 16 durchtauchen können. Die beweglichen Hilfsmittel 16 können beispielsweise um vertikale Achsen rotieren und an beiden Querseiten spiegelsymmetrisch zueinander angeordnet sein. Auch eine Baggerarmanordnung für die beweglichen Hilfsmittel ist alternativ oder zusätzlich möglich. In allen Fällen wird eine Förderung des vom Werkzeug 5, 6 abgetrennten Guts in Richtung des Förderorgans 9 zumindest unterstützt.

Ein an einen beweglichen Ausleger 3 anmontierbarer oder anmontierter Arbeitskopf 4 zum Mähen und/oder Schneiden von Pflanzenbewuchs, dem ein die Absaugung bewirkendes Förderorgan 9 zugeordnet ist, ist gesondert handelbar und daher hier auch gesondert beansprucht.

Die Einheit aus Arbeitskopf 4 und Förderorgan 9 kann insbesondere eine integrale Baueinheit ausbilden, die auch zusammen als Einheit an einen Ausleger 3 anmontierbar sein kann, so daß der Montageaufwand gering ist.

Auch diese Einheit kann insgesamt für sich modular und so ausgebildet sein, daß das zumindest eine Förderorgan 9 entweder mit an dem beweglichen Arbeitskopf 4 oder an einem beide Baueinheiten 4, 9 tragenden Rahmen 11 gehalten ist. Auch kann die Ausbildung so sein, daß der Arbeitskopf 4 mal ohne und mal mit dem Förderorgan 9 verbunden und einsetzbar ist.

### Bezugszeichenliste:

- 1: Mäh- und/oder Schneidgerät,
- 2: Fahrzeug,
- 3: Ausleger,
- 4: Arbeitskopf,
- 5: Mähwalze,
- 5a: Schlagmittel,
- 6: Mähbalken,
- 7: Auswurföffnung,
- 8: Leitung, insbesondere Schlauch,
- 9: Förderorgan,
- 10: Ansaugöffnung,
- 11: Tragstruktur,
- 11a: seitliches Längsrahmenteil,
- 11b: seitliches Längsrahmenteil,
- 12: vorderer Rahmenteil,
- 13: horizontale Querachse,
- 14: Zuförderbahn,
- 15: Einführhilfe,
- 16: bewegliche Hilfsmittel,
- 17: Leitschienen,

- A: Arbeitsrichtung,
- F: Fahrtrichtung

## Patentansprüche

1. Mäh- und/oder Schneidgerät (1) mit zumindest einem an einem Fahrzeug (2) gehaltenen beweglichen Ausleger (3), von dem ein Arbeitskopf (4) getragen ist, und mit einer Absaugung für vom Arbeitskopf (4) geliefertes Gut,
**dadurch gekennzeichnet,**
**daß** zumindest ein die Absaugung bewirkendes Förderorgan (9) dem Arbeitskopf (4) zugeordnet ist.

2. Mäh- und/oder Schneidgerät (1) nach Anspruch 1,
**dadurch gekennzeichnet,**
**daß** das Förderorgan (9) im Betrieb höchstens 1,5 Meter hinter einem schneidenden oder mähenden Arbeitsbereich des Arbeitskopfes (4) gehalten ist.

3. Mäh- und/oder Schneidgerät (1) nach einem der Ansprüche 1 oder 2,
**dadurch gekennzeichnet,**
**daß** das Förderorgan (9) ein Auswurfgebläse umfaßt.

4. Mäh- und/oder Schneidgerät (1) nach einem der Ansprüche 1 bis 3,
**dadurch gekennzeichnet,**
**daß** das Förderorgan (9) eine zentrale Ansaugöffnung (10) und eine tangentiale Auswurföffnung (7) umfaßt.

5. Mäh- und/oder Schneidgerät (1) nach Anspruch 4,
**dadurch gekennzeichnet,**
**daß** das Förderorgan (9) in eine zunächst nach oben führende Schlauchleitung (8) einfördert.

6. Mäh- und/oder Schneidgerät (1) nach einem der Ansprüche 1 bis 5,
**dadurch gekennzeichnet,**
**daß** das Förderorgan (9) ein das aufgenommene Gut über Druck weiterförderndes Organ bildet.

7. Mäh- und/oder Schneidgerät (1) nach einem der Ansprüche 1 bis 6,
**dadurch gekennzeichnet,**
**daß** das zumindest eine Förderorgan (9) mit an dem beweglichen Arbeitskopf (4) gehalten ist.

8. Mäh- und/oder Schneidgerät (1) nach einem der Ansprüche 1 bis 7,
**dadurch gekennzeichnet,**
**daß** das zumindest eine Förderorgan (9) schräg oberhalb eines schneidenden oder mähenden Arbeitsbereichs des Arbeitskopfes (4) angeordnet ist.

9. Mäh- und/oder Schneidgerät (1) nach Anspruch 8,
**dadurch gekennzeichnet,**
**daß** das zumindest eine Förderorgan (9) mit dem unteren Ende der Ansaugöffnung (10) zumindest 25 Zentimeter oberhalb des schneidenden oder mähenden Arbeitsbereichs des Arbeitskopfes (4) angeordnet ist.

10. Mäh- und/oder Schneidgerät (1) nach einem der Ansprüche 4 bis 9,
**dadurch gekennzeichnet,**
**daß** zwischen dem Arbeitsbereich des Arbeitskopfs (4) und der Ansaugöffnung (10) eine überwiegend nach unten offene Zuförderbahn (14) angeordnet ist.

11. Mäh- und/oder Schneidgerät (1) nach Anspruch 10,
**dadurch gekennzeichnet,**
**daß** die Zuförderbahn (14) zu mehr als 50% ihrer Fläche nach unten geöffnet ist.

12. Mäh- und/oder Schneidgerät (1) nach einem der Ansprüche 10 oder 11,
**dadurch gekennzeichnet,**
**daß** die Zuförderbahn (14) entgegen der Arbeitsrichtung (A) in Querrichtung verjüngt.

13. Mäh- und/oder Schneidgerät (1) nach einem der Ansprüche 10 bis 12,
**dadurch gekennzeichnet,**
**daß** die Zuförderbahn (14) zumindest zu den Querseiten von seitlichen passiven Einführhilfen (15) begrenzt ist.

14. Mäh- und/oder Schneidgerät (1) nach einem der Ansprüche 10 bis 13,
**dadurch gekennzeichnet,**
**daß** die Zuförderbahn (14) mehrere nebeneinander gelegene und zum Förderorgan (9) führende Leitschienen (17) umfaßt.

15. Mäh- und/oder Schneidgerät (1) nach einem der Ansprüche 10 bis 14,
**dadurch gekennzeichnet,**
**daß** der Zuförderbahn (14) bewegliche, vom Arbeitsbereich aufgenommenes Gut in Richtung der Ansaugöffnung (10) bewegende Hilfsmittel (16) zugeordnet sind.

16. An einen beweglichen Ausleger (3) anmontierbarer oder anmontierter Arbeitskopf (4) zum Mähen und/oder Schneiden von Pflanzenbewuchs,
**dadurch gekennzeichnet,**
**daß** zumindest ein die Absaugung bewirkendes Förderorgan (9) dem Arbeitskopf (4) zugeordnet ist.

17. Arbeitskopf (4) nach Anspruch 16,
**dadurch gekennzeichnet,**
**daß** das zumindest eine Förderorgan (9) mit an dem beweglichen Arbeitskopf (4) oder an einem beide Baueinheiten (4;9) tragenden Rahmen (11) gehalten ist.
